(19) Europäisches Patentamt
European Patent Office
Office européen des brevets

(11) **EP 2 253 893 B1**

(12) **EUROPEAN PATENT SPECIFICATION**

(45) Date of publication and mention
of the grant of the patent:
**02.11.2016 Bulletin 2016/44**

(51) Int Cl.:
***F24D 19/10*** *(2006.01)*  ***F24D 11/00*** *(2006.01)*
***F28F 27/00*** *(2006.01)*  ***F28G 15/00*** *(2006.01)*

(21) Application number: **10008700.6**

(22) Date of filing: **30.09.2004**

(54) **HEAT TRANSFER SYSTEM AND METHOD OF OPERATING THE SAME**

WÄRMEÜBERTRAGUNGSSYSTEM UND BETRIEB DESSELBEN

SYSTÈME DE TRANSFERT DE LA CHALEUR ET OPÉRATION DE CE SYSTÈME

(84) Designated Contracting States:
**AT BE BG CH CY CZ DE DK EE ES FI FR GR HU
IE IT LI LU MC NL PL PT RO SE SI SK TR**

(30) Priority: **06.10.2003 GB 0323370**

(43) Date of publication of application:
**24.11.2010 Bulletin 2010/47**

(62) Document number(s) of the earlier application(s) in
accordance with Art. 76 EPC:
**04768706.6 / 1 682 826**

(73) Proprietor: **EC Power A/S
8382 Hinnerup (DK)**

(72) Inventors:
  • **Bogner, Bjarne
    8410 Ronde (DK)**
  • **Andersen, Jens-Otto Ravn
    8000 Arhus C (DK)**
  • **Abildgaard, Soren Stig
    8541 Skødstrup (DK)**
  • **Nielsen, Jan
    4000 Roskilde (DK)**

(74) Representative: **Taylor, Adam David
Dehns
St Bride's House
10 Salisbury Square
London EC4Y 8JD (GB)**

(56) References cited:
**DE-A1- 19 504 325    US-A- 5 353 653
US-A1- 2005 133 211**

EP 2 253 893 B1

## Description

The present invention relates to heat transfer systems and in particular to heat transfer systems suitable for use in a combined heat and power (CHP) facility. The invention further relates to a method of operating a heat transfer system. A heat transfer system transfers heat from a heat source to a heat load such as a plurality of radiators. In a combined heat and power (CHP) application, the heat source also generates electricity which can be used to provide power for other appliances within an installation. For example, an internal combustion (I.C.) engine may be employed which generates heat from the engine cooling circuit and which also drives a generator to produce electricity which can power electrical appliances within a home.

In a typical CHP system an internal combustion engine is used and the coolant circuit from the engine is connected to a pump. The pump circulates the coolant around a number of radiators which provide heating to the installation. The circuit is closed such that the return water, having passed through the radiators, reenters the engine cooling circuit or, as is normally the case, enters a heat exchanger which keeps the engine (primary circuit) coolant separate from the radiator (secondary circuit) coolant. The water is then reheated and re-circulated around the system. The engine is also connected to an electrical generator which can produce electricity to power the circulation pump and also other electrical loads within the installation. Within a domestic environment such CHP units can be used to provide some or all of the heating and power needs of a home. Larger scale units can equally do the same for industrial units or facilities.

There are, however, a number of problems associated with prior art heat transfer systems, particularly in CHP applications.

Firstly, the efficiency of a CHP unit can vary considerably with electrical load and heating load as well as with other factors such as the age and efficiency of the components within the circuit. A particular area of potential inefficiency within conventional CHP plants is within the heat exchanger which is used to separate the primary and secondary coolant circuits. One reason that the circuits are kept separate is to prevent contamination from the radiator circuit entering the engine circuit.

The efficiency of a heat exchanger can decrease rapidly as the internal pipework surfaces become degraded due to calcification and/or corrosion. Where a heat exchanger is used with hard water (i.e. water with a high calcium content) the internal pipework or conduits can become coated with a lime-scale layer which reduces the heat transfer properties of the heat exchanger. Insulating the internal surfaces reduces the heat transfer coefficient between the two fluids and thereby reduces the overall efficiency of the heat exchanger. This thereby reduces the ability of the CHP unit to meet the heating needs of the installation. Problems of heat exchanger degradation are often only realised when the heat exchanger is disassembled for maintenance work and the lime-scale is removed or when the system fails completely.

A further area of inefficiency relates to the operation of the heat source in conjunction with the heat exchanger. Conventional heat transfer systems and CHP units can be extremely inefficient in operation where there are fluctuations in demand for heat and power. Demand fluctuations result in a corresponding fluctuation in the operation of the heat and power source e.g. an internal combustion engine which is constantly attempting to match supply and demand. In extreme circumstances the heat source may switch on and off intermittently in order to meet the demands of the installation which results in highly inefficient operation.

It is desirable to maintain the heat and power source at a constant level at which it can operate efficiently. It is also desirable, when the system is in operation, to maintain the largest possible heat transfer capability between the heat source and the heat load so that the demands of the load can be met as quickly and efficiently as possible. Intermittent and/or unstable demands on the heat and power source mean that the highest operational temperatures of the source are not achieved.

The reliability and efficiency of domestic and industrial heat transfer systems, such as CHP units, is critical where there are limited other sources of power or heat. This is particularly the case in installations where a CHP unit has been selected as the main or only source of heat and power.

US 5353653 and DE 19504325 disclose heat transfer systems of the type defined in the preamble of claim 1.

There is therefore a need for a heat transfer system which provides improved efficiency and reliability over prior art systems.

According to a first aspect of the present invention there is provided a heat transfer system having a heat source; a heat load; a heat exchanger for transferring heat from said heat source to said heat load, the heat exchanger comprising: a hot side having an input and an output and a cold side having an input and an output; temperature sensors placed to measure the temperatures of inputs and outputs of the heat exchanger; and a means for monitoring the thermal efficiency of the heat exchanger that is arranged to calculate the thermal efficiency based on the measured temperatures; characterized in that a change in thermal efficiency of the heat exchanger is determined by measuring the thermal efficiency at a first time and a second time; in that the heat transfer system is arranged to predict when the heat exchanger will reach a pre-determined thermal efficiency using the measured thermal efficiency values; and in that the pre-determined thermal efficiency is determined based on the current heat exchanger thermal efficiency and the temperature in a return to the heat exchanger.

Since thermal efficiency of a heat exchanger will generally decline over time (due to calcification, etc.)

this provides a useful way to determine optimum servicing.

In a similar way other components within the CHP unit can be monitored. For example, problems resulting from faulty valves, pumps or the like within the CHP system may not be realised either until a complete failure of a component occurs or until a scheduled service is reached and the faulty component is dismantled and/or replaced.

The present invention therefore provides a means for monitoring the changes in thermal efficiency of the heat exchanger within the system. Monitoring the change in thermal efficiency can be used to determine, by extrapolation and preferably in combination with other measured parameters of the system, when the heat exchanger or other component requires maintenance and/or replacement.

Other parameters of the system may be determined to accurately calculate the efficiency of the unit such as primary circuit mass flow rate, secondary mass flow rates and the temperature demand of the installation. These parameters may also be monitored and compared over a period of time to predict other maintenance requirements of the system.

The analysis of the data recorded relating to efficiency or other parameters may be processed instantaneously or, alternatively, may be recorded and processed to determine efficiency at a later time. For example data may be processed daily, weekly or monthly.

The heat exchanger efficiency may be calculated by measuring the temperatures of at least one input and one output. Preferably, the thermal efficiency is determined by measuring the temperatures at all inputs and all of the outputs of the heat exchanger.

The temperatures of the inputs and outputs to the heat exchanger can be measured using any suitable temperature sensitive device. For example, externally mounted thermometers may be used which return a signal indicating the temperature of the input(s) and/or output(s) of the heat exchanger. Alternatively thermometers may be mounted within the pipe-work and directly in the flow of coolant in the respective circuit.

The thermometers may further be provided in recesses or pockets formed in the heat exchanger proximate the desired temperature measurement points. These 'pockets' are known as thermo-wells.

The thermometers arranged to measure the temperature of the heat exchanger inlets and outlets may be internal or external thermometers. Where a heat exchanger is used with a plate construction the thermometers are preferably mounted into recesses formed in the plates of the heat exchanger. The individual plates of the heat exchanger can be formed with holes proximate the inlet and outlet pipe-work so as to locate a thermometer close to the inlet or outlet of the heat exchanger in operation. Alternatively, the plates of the heat exchanger may be arranged with holes such that a hole is formed through the entire width of the heat exchanger such that the thermometer can be located at any point across the width of the heat exchanger.

The temperature signals are preferably received by a processor which uses a suitable algorithm to determine a signal indicating the efficiency of the heat exchanger for the given temperature signals. The efficiencies may be stored and/or processed in a computer or other processor. The processor may further be provided with means to output the calculated efficiency to the user by, for example, a visual display unit or by an alarm of some kind.

The heat transfer system may further include a local processor for receiving the temperature data information from the heat exchanger, heat source and installation. The local processor may determine, using real time and/or historic data about the system, if the thermal efficiency of the system is degrading and/or if the system requires maintenance. The processor preferably has means to indicate the current status of the system and to request maintenance of all or part of the system. The processor may also be provided with means to control the heat source irrespective of the demands from the installation.

The system may further includes means to transfer the data to a central processing centre or unit and to receive control signals from a central processing unit for controlling components within the system. For example, the central processing centre may control the engine speed in response to a high engine temperature signal or may control the re-circulation flow in response to a low mass flow rate signal. The efficiencies and conditions of the CHP unit may be monitored and controlled locally or remotely by the central control centre.

The system may send and receive control signals and system information via any suitable connection. The connection may be a dial-up connection to a central processor. Preferably the connection to the central processor is via the World-Wide-Web using a suitable communication protocol and local or web based computer or server.

The central processing centre may monitor and/or control a single CHP unit but preferably monitors and/or controls a plurality of CHP units. The central processing centre may also schedule maintenance for each of the CHP units based on the operational data received the units in combination with maintenance of other units.

In a preferred embodiment the heat exchanger has a primary and a secondary circuit arranged to communicate heat between said heat source and said heat load and the system comprises a feedback conduit fluidly connecting the output of the secondary circuit to the input of the secondary circuit so as to allow secondary circuit output fluid to return to the input of the secondary circuit, wherein the flow through said feedback conduit is controlled whereby the primary circuit temperature may be regulated.

Thus, controlled re-circulation of the secondary circuit coolant is provided. The efficiency of the heat source is greatly improved if it is operated at a high output level and in particular if the heat source is maintained at a high and stable temperature. Controlling the re-circulation of the secondary circuit allows the primary circuit temperature to be controlled because it enables the temperature of the secondary coolant (and hence the differential between the temperature of the primary and secondary coolant circuits) to be controlled.

The heat source may be any suitable form of heat such as a boiler. Preferably the main source is a source of both heat and electricity such as, for example, an internal combustion diesel engine coupled to an electric generator. The heat from the engine is transferred to the heat exchanger of the CHP unit by the primary coolant which flows around the engine block and which is communicated to the primary circuit of the heat exchanger. Electrical energy is provided by an electrical generator connected to the engine which itself is connected to the electrical load of the CHP system e.g. a television or kettle in a house. The secondary coolant flows around the installation (e.g. through radiators) and through the secondary circuit of the heat exchanger where heat is transferred from the primary circuit.

The flow through the feedback pipe or conduit is preferably readily controllable, for example by means of a control valve such as a three-way control valve. Preferably the output pipe from the secondary circuit is connected to the input of the secondary circuit through a mixing control valve. The mixing control valve may have an input for receiving fluid from the heat exchanger, and may also have an output for communicating fluid to the load or installation (for example to a heat storage tank or radiator) and a second output for re-circulating fluid to the secondary side input of the heat exchanger. The mixing control valve also has control means to receive control signals for selectively controlling the output from the heat exchanger between the re-circulation pipe-work and the load pipe-work.

The control valve may be controlled locally in response to signals from thermometers indicating the temperatures of fluid in the heat exchanger primary and secondary circuits. Alternatively, the control valve may be controlled remotely wherein temperature information about the heat exchanger circuits and heat source are transmitted to a central processing centre which processes the data and send control signals to the control valve in order to control the re-circulation flow.

Indications of the operating conditions of the heat source may also be used to control the control valve. Where an I.C. engine is employed for example, there is a relationship between the amount of heat generated by the engine, the engine speed and the load applied to the engine. This in turn indicates the amount of heat which must be removed from the engine to maintain operation.

In a CHP system this provides a maximum allowable return coolant temperature to the engine i.e. the maximum temperature returning to the engine from the primary side of the heat exchanger (if the secondary coolant is too hot then it cannot take sufficient heat from the engine via the primary coolant). The control valve may also therefore be provided with an indication of engine temperature which can be used to determine the required re-circulation flow to maintain engine operation.

The control or mixing control valve can be arranged to control the re-circulation of fluid using this engine specific information and an indication of the return coolant temperature on the primary side of the heat exchanger. The mixing valve controls the flow of fluid based on the requirements of the engine and also the heating requirements of the installation. Re-circulating the secondary circuit fluid around the heat exchanger has the effect of increasing the temperature of the secondary circuit fluid as it flows repeatedly around the circuit collecting more and more heat from the primary circuit. The laws of thermodynamics dictate however that the heat transferred from the primary to the secondary circuit diminishes as the secondary circuit temperature approaches the primary circuit temperature. This therefore has the effect of reducing the heat which is removed from the primary circuit and from the engine and thus increases the return temperature from the primary circuit to the engine. Control of the mixing valve can thereby control the engine temperature precisely.

A further advantage of re-circulating the secondary coolant flow is that it decreases calcification in the internal pipe-work of the heat exchanger. Low flow rates have been shown to increase calcification and/or corrosion whereas heat exchangers with high flow rates exhibit lower calcification and corrosion.

Faults within a CHP unit can also result in reduced efficiencies. Some faults, as discussed with reference to the heat exchanger, are sometimes not apparent until the system fails or until the unit has been serviced.

A control system for controlling a plurality of CHP units may comprise means for receiving operation data relating to each unit, a central processor for processing said data and means for sending control signals to individual CHP units.

The control system may receive any operational data relating to the unit. For example, the system may receive data relating to engine load, engine temperature, heat exchanger temperatures, coolant mass flow rates and installation heating and power requirements.

The control system may return control signals to the unit to control the respective components so as to maintain normal operation or, alternatively, to prolong normal operation. The control system may, for example, be able to adjust the output of the engine remotely or turn the engine on or off completely.

The control system may also store historical data relating to each unit and may predict service intervals or maintenance requirements for all or each unit.

Viewed from another aspect, the present invention provides a method of maintaining a heat transfer system having a heat source; a heat load; a heat exchanger for transferring heat from said heat source to said heat load, the heat exchanger comprising a hot side having an input and an output and a cold side having an input and an output; and temperature sensors placed to measure the temperatures of inputs and outputs of the heat exchanger; the method comprising:

determining a change in thermal efficiency of the heat exchanger by measuring the thermal efficiency at a first time and a second time, wherein the thermal efficiency is calculated based on the measured temperatures; and using the change in thermal efficiency to predict when the heat exchanger will reach a predetermined thermal efficiency, wherein the predetermined thermal efficiency is determined based on the current heat exchanger thermal efficiency and the temperature in the return to the heat exchanger.

A preferred embodiment provides a method of scheduling maintenance for a CHP unit comprising the steps of (A) receiving data relating to the efficiency or performance of a unit over a time period, (B) extrapolating said data to calculate predicted future efficiency or performance information and (C) scheduling maintenance so as to avoid a pre-determined value(s) of said data being reached.

This may be done by comparing the extrapolated information with pre-determined values and predicting when said pre-determined values will be reached.

The pre-determined values may be any value which, when reached, will cause the system to fail. Alternatively the pre-determined values may be an upper or lower acceptable limit of a particular component of the unit. For example, the pre-determined value may be the maximum return temperature which the engine can receive without overheating; once this value is reached the engine will begin to overheat if the system continues to operate.

The system may further be provided with means to indicate to the operator or user of the CHP unit that maintenance is required or that a pre-determined value has or will be reached. The required maintenance may be calculated locally at the unit itself and a request issued from the local control unit for maintenance. The control unit preferably indicates with the request what sort of maintenance is required. Preferably the

maintenance is scheduled centrally for a number of CHP units.

The present invention provides a system for operating and controlling a single or plurality of heat transfer systems such as CHP units so as to operate efficiently and reliably and provides a means to prevent or predict failure of power and heat supplies by monitoring performance and by scheduling the necessary maintenance for each unit.

Preferred embodiments of the present invention will now be described, by way of example only, and with reference to the accompanying drawings, in which :

Figure 1 shows simple application of a heat exchanger with a heat source and a heat load.
Figure 2 shows a the components of the CHP unit for an installation in a domestic home
Figure 3 shows a schematic of a heat exchanger according to one embodiment of the invention including the temperature sensors
Figure 4 shows a preferred pipework installation of the present invention.
Figure 5 shows a plate heat exchanger with thermowells
Figure 6 shows a second plate heat exchanger with thermo-wells.
Figure 7 shows a schematic of a circuit according to an embodiment of the present invention.
Figure 8 shows graph of unit parameters versus time.

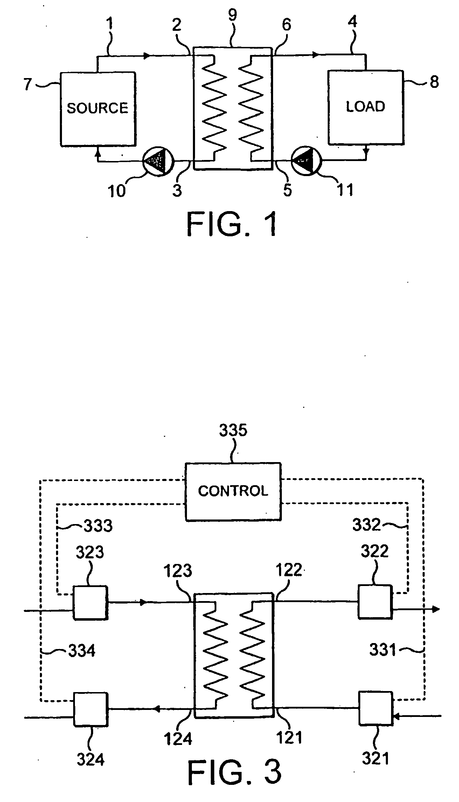

Figure 1 shows simple heat exchanger. The heat exchanger has a primary circuit 1 with an input 2 and an output 3 and a secondary circuit 4 with an input 5 and an output 6. Water, or coolant, flows from the heat source 7, for example a boiler or engine, through the heat exchanger primary circuit and back to the heat source again. On the secondary side, coolant flows from the load 8, for example a radiator, through the secondary channels inside the heat exchanger and back to the load. Heat is thereby transferred to the secondary circuit from the primary circuit. The actual temperature of the water in the secondary circuit is a function of the temperature differential between the two circuits, the thermal efficiency of the design of the heat exchanger, the mass flow rate of the circuits and of the degradation of the heat exchanger.

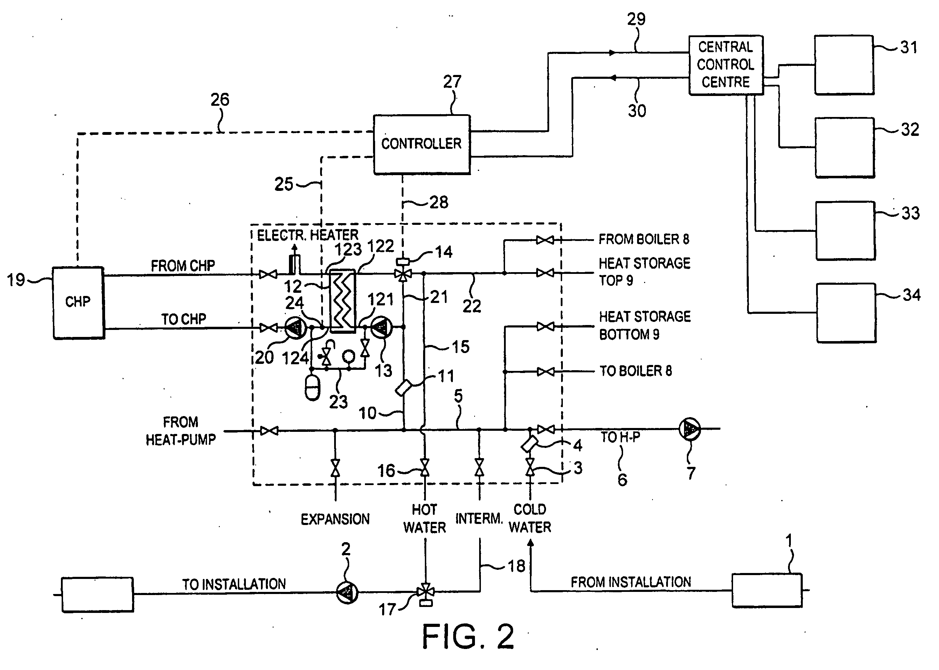

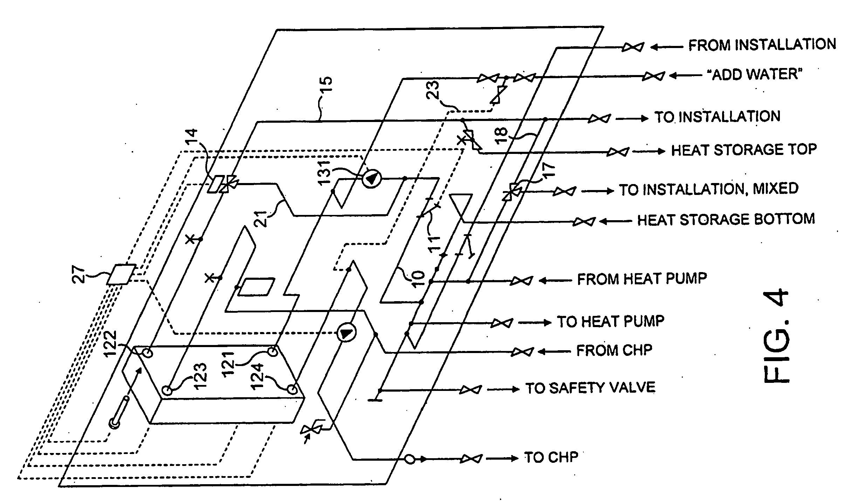

Figure 2 shows the components of a system according to the present invention in a domestic home installation and figure 4 shows a preferred installation diagram of the components. In a typical combined heat and power unit installed in a domestic home, hot water from the CHP unit is pumped to the radiators 1 around the house by a pump 2. Heat is expended in the radiators as the water travels around the heating circuit or installation. Cold water eventually returns to the CHP unit via a non-return valve 3 and filter 4 having completed a circuit of the installation.

Water entering the CHP unit enters a manifold 5 which connects the return water pipe to a heat pump 6 and to a boiler 8 and also to a heat storage tank 9. The heat pump 7 is used to pre-heat the water returning from the installation should the water return at a particularly low temperature. Because the engine 19 has a maximum heating capacity, for example the maximum differential an engine can generate between coolant input and coolant output, it may be necessary to operate the heat pump to bring the water up to a pre-heated level in order that the engine can heat the installation water to the required level. The heat pump receives water via the water pump 7. The engine 19 may be a gas or petrol engine or any other engine but is most preferably a diesel internal combustion engine.

Water can also be diverted to a boiler 8 for the same purpose of preheating water. There is also a connection to the cold side of a heat storage tank 9 for receiving cold water from the tank which is used as a sink for heat generated by the unit. This will be described in more detail below.

Water leaves the manifold 5 via the heat exchanger connection pipe 10 and through filter 11. A pump 13 drives the water into port 121 of heat exchanger 12 which is the secondary side, or cold side, of the heat exchanger. Water passes through the secondary side of the heat exchanger to the output 122 having been heated by hot water flow in the primary side of the heat exchanger between ports 123 and 124.

On the primary side of the heat exchanger pump 20 circulates the primary water flow around the heat exchanger and to the engine 19. Water enters the cooling channels within the engine, the water is heated and returned to the heat exchanger at port 123. An optional electrical heater can be connected to the primary circuit to preheat the primary circuit and to speed up the process of heating the primary circuit.

The primary circuit water level is maintained by a water level compensation unit 23 which allows small amounts of water to flow directly to the primary circuit from the secondary circuit to ensure that the coolant around the engine is always full. Reductions in coolant levels around the engine could result in overheating and damage. The mass flow rate of water in the primary circuit and around the engine is preferably maintained as a constant.

Water leaving the secondary side of the heat exchanger enters a three way mixing control valve 14 which controls the flow of water between a re-circulation connection 21 and an output connection 22. The re-circulation connection 21 allows water to re-circulate around the heat exchanger secondary circuit thereby increasing the flow rate and increasing the temperature of the secondary water with each circulation of the water. In one embodiment the speed of pump 13 can also be controlled so as to alter the flow rate in response to control signals from the mixing valve 14 or from a CHP control unit.

The CHP unit normally operates in an autonomous mode of control wherein the system components, such as 3-way valve 14, are monitored and controlled locally. In the preferred embodiment this local control operates in conjunction with a central monitoring and control centre which can monitor, control and even over-ride the local control system for a given CHP unit. These control units are described in detail as follows.

With further reference to figures 2 and 4, components such as the mixing control valve 14 and pump 13 are controlled by a CHP local control unit 27. Control unit 27 receives a signal on control line 25 from temperature sensor 24 which measures the water temperature of the coolant returning to the engine 19. In addition, the controller receives/an engine load and/or temperature signal on control line 26 from engine 19 and also an input indicating the heating requirements of the installation which may, for example, be from a thermostat in the installation to control the installation temperature. The control unit 27 receives the engine load or temperature signal and calculates, for the given engine and load, the maximum return temperature of coolant to the engine on the primary side of the heat exchanger. This may be in the form of a look up table in the unit or may be calculated taking into consideration other parameters such as for example ambient temperature etc. The control unit aims to maximise the output temperature of the engine i.e. the input water temperature at port 123 and does this by determining the temperature of the water which is required at port 124 to achieve this temperature given the heat generating capacity of the engine under current conditions. This can be calculated because the heat output of a given engine will be know for a given engine load and operating conditions.

The control unit 27 sends a control signal to mixing valve 14 on control line 28 which is used to control the amount of water which is diverted along re-circulation pipe 21. The temperature at port 124 is constantly measure until the maximum return temperature is reached at which point control unit 27 sends a control signal to the mixing valve to divert water along line 22. As engine load changes so too does the maximum water temperature at point 124 and so the mixing valve can be controlled accordingly to maintain the maximum temperature of water for return to the engine.

For example, under high loads the engine will generate high levels of heat and will therefore require higher levels of cooling to ensure that it does not reach its maximum permitted operating temperature and overheat. Under high loads the return temperature at port 124 will therefore be reduced to ensure that there is sufficient cooling for the engine. To achieve this the mixing valve 14 will reduce or completely stop the re-circulation of water around pipe 21. The hot water reaching the mixing valve will then all be diverted to pipe 22 to remove as much heat from the engine as is required. Once the engine heat output has stabilised the mixing valve can control, via the control unit, the precise amount of re-circulated water to achieve a stable return engine temperature.

Water leaving the mixing valve on pipe connection 22 can either enter a heat storage device or can be diverted out to the installation via pipe 15.

The water flows are centrally controlled by the local control unit 27 which controls the valves and pumps within the CHP unit. In addition to the control signals from the engine and temperature sensor, the control unit also receives signals from the installation indicating the requirements of the installation in terms and heat and electricity. The control unit can control the engine and heat exchanger, together with the other heat generating and storage means within the CHP unit, to match supply with demand for the installation.

The control unit may be connected to a central control centre 28 via control lines 29, 30. The CHP local controller 27 can control the unit autonomously in normal operation with no intervention from the central control centre 28. Preferably the local control unit sends information relating to the unit to the central centre which can monitor the operation of the unit. If the central control centre determines that the unit is not operating correctly then it can control the unit remotely using control lines 29, 30. The central control centre may control a plurality of CHP units 31, 32, 33, 34 in a similar way and may schedule maintenance for each and/or all of the units to maximise overall efficiency of maintenance and operation.

Typically, hot water will leave the mixing valve and will feed out to the installation via output line 15. Line 15 is connected to an additional mixing valve 17 which can mix the output hot water with intermediate water from the manifold 5 via line 18. This adds an additional level of control. If the water entering the manifold is still hot enough to circulate around the installation i.e. its temperature is close to or matches

the heat requirement of the installation it can be allowed to re-circulate via line 18 and mix with the output from the CHP via pump 2 and out to the radiators 1 of the installation.

Pipe connection 15 is also connected to pipe connection. 22 which itself is connected to the output of the boiler and to the heat storage device or sink.

If for some reason the CHP unit cannot match the heating requirements of the installation, or perhaps the electrical requirement of the installation is zero, the control unit 27 can activate the boiler to provide an alternative source of heat. In the situation where no electricity or small amounts of electricity are required the control unit may switch off the engine completely or may lower the power output of the engine so as to generate heat mainly from the heat pump and/or boiler.

Alternatively, the control unit may match demand from the installation for only heat by using the excess electrical energy produced by the engine to power the heat pump and/or boiler to supply additional electrically generated heat. This will thereby maximise the efficiency of the unit in meeting the installation's heat requirements.

The heat storage tanks 9 act as heat sinks to absorb excess heat generated by the CHP unit during times when the production of heat exceeds demand. The inclusion of storage tanks allows the CHP to operate when there is small demand for heat and higher demand for electricity because the excess heat can be removed from the engine whilst it is generating the electricity. In addition to being able to absorb the hot water the tanks can also be used as a source of heat for the installation. When the tank temperature reaches a level which matches the installation temperature requirements, the water can be used to directly feed the installation via the manifold and pipe connection 18.

During normal operation of a CHP plant in a home for example, the demands of the installation in terms of both electricity and heating will fluctuate. The control unit has to response dynamically to changes in demand to achieve the greatest possible efficiency for the unit as a whole. Control of the unit and the engine depends on a number of factors and parameters which are received by the control unit 27.

The arrangement of the CHP device in conjunction with the storage tanks and alternative heating systems such as the heat pump provide flexibility for the control system in the way it meets demand. During normal operation, the control unit will constantly monitor installation demand and control the engine and flows within the unit to meet that demand. Problems occur however when limits of the system are reached or unusual conditions occur. In these circumstances the control unit has to take alternative action to control the unit.

Four example situations of the operation of the CHP unit are as follows:

Situation 1 : the storage tanks are at capacity and cannot store any additional heat. The CHP plant is activated and there is an electrical requirement but no heat requirement from the installation; for example a kettle it turned on. In this situation the engine cannot be permitted to operate because there is no capacity in the storage system to cool the engine. In this situation a heat sink can be provided external to the CHP plant which may, for example, be an air cooled radiator as used in a conventional engine in a car. Without an additional heat sink the engine cannot operate and the unit will not be able to meet the installation demand.

Situation 2 : there is just enough capacity in the storage tanks to run the engine to meet electrical demand. If electrical demand stops then any heating demand can be met by the hot water storage tanks. In this situation the engine can operate to meet limited electrical demand. If the heat storage tanks have sufficient heat they can be used to meet any heating demand from the installation. In this situation operation of the engine is dependent only on electrical demand of the unit.

Situation 3 : the heating demand is increasing from the installation but electrical demand is low. In this situation the control unit will use the heat storage tanks to meet demand. When a predefined minimum temperature has been reached in the heat storage tanks the control unit will activate the engine and begin to bring the heat storage tanks up to a normal level. In this situation operation of the engine is also optional provided the storage tank heat level minimum has not been reached and electrical demand is zero. Where the engine is running and electrical demand is low the control unit will activate a heat pump as a load for the electricity being generated by the engine which itself will generate additional heat.

Situation 4 : there is high demand from the installation for heat. In this situation the engine may not be able to meet the demand alone and so the control unit will activate the boiler and perhaps also the heat pump to meet demand. In this situation the engine must operate.

The heat transfer system may also be provided with other means to remove heat from the heat source. For example where an internal combustion engine is used an exhaust gas heat exchanger may also be used to remove heat from the exhaust gases leaving the engine. The exhaust gas heat exchanger may be incorporated into the water heat exchanger or may be a separate heat exchanger connected to the installation. The exhaust gas heat exchanger may be monitored by the control system using thermometers in a similar way to the water heat exchanger described herein in order to indicate any malfunction in the exhaust gas heat exchanger.

There are also situations where the control unit has to use the heat pump to pre-heat the water in the secondary circuit. Situations where this may occur are when the returning water from the installation is relatively or extremely cold. If, for example, the required temperature of the installation was 80 degrees C and the engine could raise the temperature by 30 degrees under normal operation then this would not, on its own, match the requirements of the installation. In this situation the control unit will activate the pre-heater which may be a boiler or heat pump and which can preferably be powered by the electrical output of the engine. This also has the advantage of providing an increased electrical load which then increases the heat output of the engine as discussed above.

For example, if the return temperature from the installation is 30 degree C, a heat pump could be used to raise the temperature to 50 degrees C. The CHP could then raise the temperature by the remaining 30 degrees to the required 80 degrees. The return temperature from an installation can vary considerably, for example from 25 to 65 degrees C depending on the environment and the ambient temperature. The control unit will therefore constantly monitor the return temperature and requirements and activate the pre-heater as and when required.

Figure 3 shows an embodiment of the invention in which the heat exchanger ports 121, 122, 123 and 124 each have a temperature sensor 321, 322, 323, 324 reading the temperature at that port. The temperature readings are communicated to the control unit 335 along communication lines 331, 332, 333 and 334 which uses the information to determine the efficiency of the heat exchanger.

The temperature sensors may be externally mounted around the heat exchanger or may alternatively be mounted inside the pipe-work or in 'thermo-wells' formed within the heat exchanger or pipe-work. Control unit 335 may be part of the main local control unit 27 or may alternatively by a separate unit connected to the main local control unit.

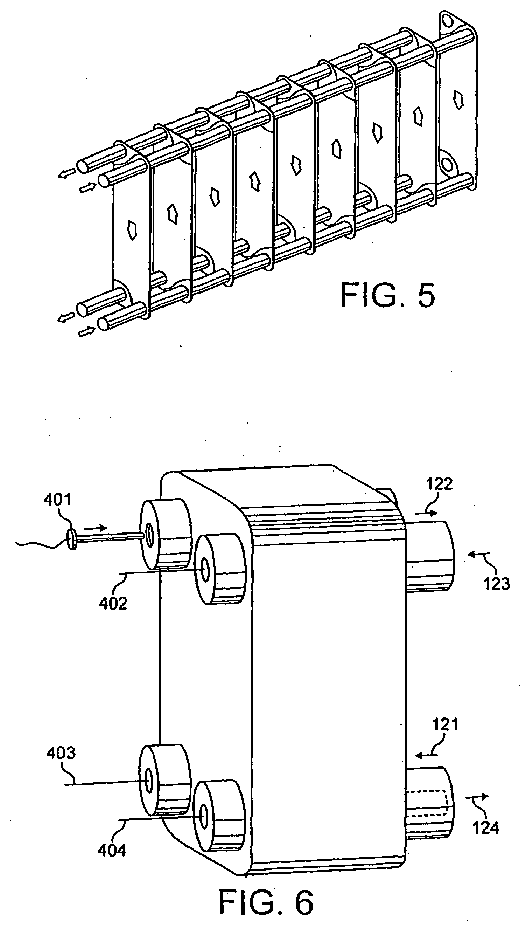

Figure 5 shows a plate heat exchanger wherein the thermo-wells are formed by holes in the plates making up the heat exchanger construction. In this construction it is possible to build the thermo-wells directly into the plate heat exchanger and thus allow the thermometers or temperature sensors to be positioned close to the inlet and outlet conduits of the heat exchanger. This arrangement permits the temperatures at the 4 heat exchanger ports to be measured precisely. In a plate heat exchanger shown in figure 5 the warm and the cold media flows between plates as shown. The plates are fabricated with holes close to each corner that distribute water to the spaces between the plates.

Figure 6 shows a still further arrangement for the positioning of the thermometers or temperature sensors within the heat exchanger. Figure 6 shows a heat exchanger in which holes are formed within the plate construction which provide a hole through the entire width of the heat exchanger. These holes provide space for mounting the thermo-wells on the opposite site of the connections to the pipes and allow the thermometer or sensor 401, 402, 403, 404 to be positioned at any point across the heat exchanger.

The control and monitoring for the heat transfer system, and the calculation of heat exchanger efficiency, is based on temperature inputs from the heat exchanger and from the power unit. The power unit temperature input indicates the instantaneous heat production of the power unit. The heat exchanger efficiency may be calculated locally by control unit 27 or alternatively remotely at control centre 28.

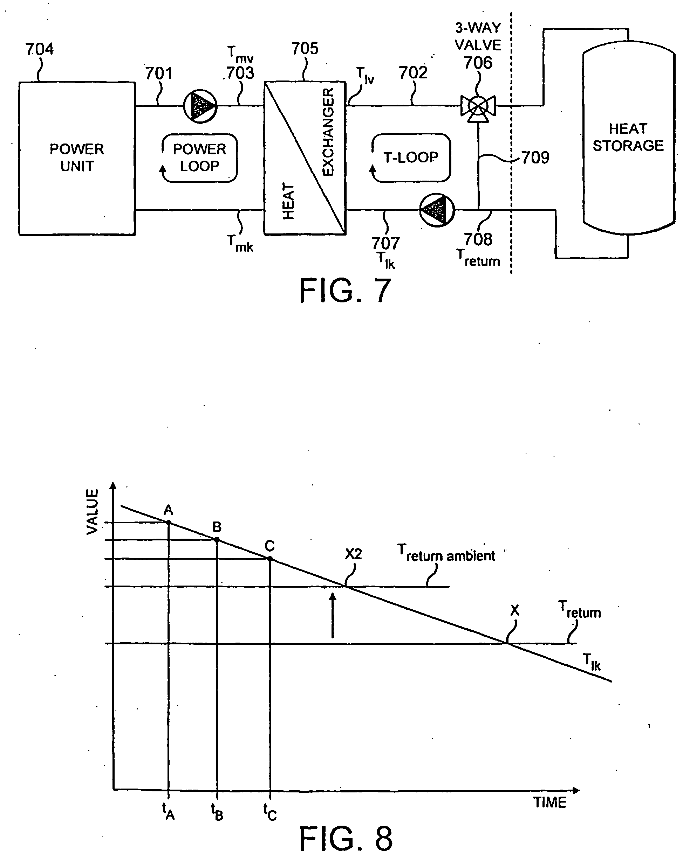

The calculations used to determine the efficiency of the unit are explained below and with reference to figure 7.

The control system works with three different types of parameters - variables, state constants and systems constants :

Variables : the first are the variables that are monitored continuously;

| | |
|---|---|
| Actual Power Unit heat production | $q_m$ |
| Various temperatures | $T$ |

State constants: the second are the characteristic values that give the state of the system. These are frequently calibrated and include;

| | |
|---|---|
| Mass flow, power loop | $\dot{m}_m$ |
| Mass flow, T-loop | $\dot{m}_l$ |
| Heat exchanger, heat transfer capacity | $kA$ |

System constants: the system constants are preset from installation for a given CHP unit;

| | |
|---|---|
| Set point temperature of Power Unit | $T_{mv,set}$ |
| Upper limit temperature of Power Unit | $T_{mv,upper}$ |
| Maximum Power Unit heat production | $q_{m,max}$ |
| Specific heat capacity, power loop | $C_m$ |
| Specific heat capacity, T-loop | $C_l$ |

As shown in figure 7, the power loop 701 corresponds to the primary circuit of the heat exchanger and the T-loop 702 corresponds to the secondary circuit of the heat exchanger.

As discussed above the unit may be controlled locally in an autonomous mode or alternatively may be controlled remotely by a central control centre. In normal operation the unit is controlled as follows with reference to figure 7.

Heat exchanger efficiency can be improved by maintaining stable conditions on either side of the heat exchanger. In the control system according to the present invention the aim is to control the system to achieve a stable heat exchanger input temperature $T_{mv}$ (703). In conventional temperature control systems the T-loop (702) will therefore be adjusted directly by a temperature measurement on $T_{mv}$. However this type of control operates with a high time delay because of the heat capacity of the engine, the time it takes the coolant to pass through the power unit (704) and the time delay of the 3-way valve (706). Variations in the load applied to the power unit and the heat production from the power unit cause the temperature $T_{mv}$ to fluctuate at an unacceptable level.

The present invention continuously calculates a new temperature set-point $T_{mk,set}$ based on actual the heat production of the power unit together with measured information indicating the mass flow and specific heat capacity of the power loop. The temperature set-point acts as a trigger for operating the 3-way valve (706). The temperature set-point is calculated as :

$$T_{mk,set} = T_{mv} - \frac{q_m}{\dot{m}_m c_m}$$

The difference between the calculated $T_{mk,set}$ and the measured $T_{mk}$ for the input to the heat exchangers (705) is used to control the 3-way mixing valve. Controlling the 3-way valve in this way means that the time delay of the control loop becomes shorter because the heat capacity of the engine and the time it takes the coolant to pass through the power unit does not influence the control. In addition, the heat capacity of the engine can now act as a dynamic damper to assist in maintaining a constant $T_{mv}$ value.

In situations where the engine temperature begins to rise, the control system needs to determine if the engine should be stopped to avoid overheating. The maximum temperature of the engine is $T_{mv,upper}$ and so if $T_{mv}$ reaches this level then the engine will be overheating. $T_{mv,upper}$ is a preset value in the system dependent on the particular engine and characteristics of the unit. The control system will call for a stop of the power unit when the following equation has been true for a specified time (for example 10 seconds)

$$T_{mk} > T_{mv,upper} - \frac{q_m}{\dot{m}_m c_m}$$

An alternative is to use the difference in temperatures of $T_{lk}$ (707) and $T_{retur}$ (708). When $T_{retur}$ gets close to $T_{lk}$ it indicates that the 3-way valve is completely open i.e. no coolant is being re-circulated to the heat exchanger via conduit (709) and the system has no more capacity for any further increase in temperature. If this condition is reached the power unit is stopped. However, if $T_{retur}$ is well below $T_{lk}$ it indicates that the 3-way valve still has room to adjust the temperature. The system constants are calibrated when the system has been running at a stable level for a specified time (for example 1 minute). Once the system has stabilised it is possible to calibrate the state constants of the heat capacities power-loop-flow $\dot{m}_m$ and the T-loop-flow $\dot{m}_l$. The equations used are as follows :

$$\dot{m}_m = \frac{T_{mv} - T_{mk}}{q_m c_m}$$

$$\dot{m}_l = \frac{T_{lv} - T_{lk}}{q_m c_l}$$

(where $\dot{m}_m$ is the mass flow rate in the power unit, and $\dot{m}_l$ is the mass flow in the T-loop-flow)

The variables and constants measured by the system can be used to evaluate the condition of the CHP unit and can be used to determine which components, if any, are malfunctioning. As discussed above the local control system may determine the condition of the unit autonomously or, alternatively, a central control centre may monitor the unit and control the unit remotely and even over-ride the local control unit.

The thermometers connected to the heat exchanger can also be calibrated and monitored for any malfunctioning. When the engine stops after a longer periods of operation, the heat production from the engine decreases until it reaches the ambient temperature. Since flow continues in the heat exchanger, all four measuring points will quickly reach the same stable temperature. This effect is used to calibrate the four thermometers in the heat exchanger. If one of the thermometers shows temperatures that vary more than a certain limit from the other thermometers, it can be concluded that the thermometer is malfunctioning.

Using the state constants and variables discussed above it is possible to evaluate the condition of the components in the system such as the heat exchanger. A number of problems may be identified by the control system (either locally or centrally) and these can be divided into at least three levels as follows :

Problems at the lowest level may require the local control system to signal to the central control system that the unit is not operating at optimum conditions. For example the local control unit may indicate to the user or to the central control centre that the heat exchanger is not operating at optimum performance. These conditions are not critical to the continued operation of the unit.

Problems at the second level are more critical and require that the unit is inspect or serviced. Level two indications from the control system may be based on monitoring the unit over a period of time. Level two indications or warning would preferably be identified early by recording a trend and reporting when a pre-determined 'alarm' level is reached. This may for example be the mass flow rate in the T-loop circuit dropping, perhaps indicating that a circulation pump was beginning to fail.

Problems at the third level are critical and require that the unit is stopped immediately. This may for example be because of overheating in the power unit.

Preferably the condition of the CHP unit are monitored continuously and recorded to provide a data history for each of the measured variables of the system. The data may be stored locally or may alternatively be communicated to the central control system. Trends in the data can be established and compared with other variable such as for example outside air temperature to determine if the performance of each individual CHP unit.

The heat exchanger is a critical component of the CHP system. Failure of the heat exchanger will mean that the entire system has to be stopped. The heat exchanger is one component which is known to degrade over time. The heat exchanger capacity is therefore continuously, or perhaps intermittently monitored as follows.

The efficiency of the heat exchanger is also calculated and, as discussed above, can be used to predict and schedule the necessary maintenance of the heat exchanger. The efficiency of the heat exchanger ($kA$) is calculated as follows :

$$kA = \frac{q_m}{\dfrac{T_{mv} - T_{mk} - T_{lv} + T_{lk}}{\ln \dfrac{T_{mv} - T_{mk}}{T_{lv} - T_{lk}}}}.$$

As the heat exchanger degrades, for example due to calcification and/or corrosion, its capacity ($kA$) will decrease. The determination of $kA$ is shown above and can be calculated by measuring the temperatures around the heat exchanger. The control system monitors and records values for $kA$ over time which can be used to determine the rate of deterioration of the heat exchanger. The collected date can be compared with known operational data for the specific heat exchanger so as to determine if the heat exchanger needs to be changed and/or serviced. Figure 8 shows how the heat exchanger deteriorates over time. As shown in figure 8 the heat exchanger degrades so too does $T_{lk}$ i.e. the maximum temperature of T-loop coolant which can enter the heat exchanger to maintain $T_{mv}$ constant. As the efficiency of the heat exchanger degrades this results in a decrease in the return temperature from the installation which is needed to keep the engine below its maximum operating temperature $T_{mv,upper}$. (degradation means that the heat exchanger is unable to remove heat from the power loop circuit to the T-loop circuit). This can be a further problem as ambient temperatures rise which increase the return temperatures of the installation thereby reducing the cooling capacity of the coolant for the power unit circuit still further. As shown in figure 8 (point X) when $T_{lk}$ reaches the $T_{retur}$ there is not more 'cooling' capacity within the installation and no more heat can be absorbed from the power unit circuit. As the ambient temperature increases the intersection point X moves as shown at X2 (see $T_{retur}$ ambient in figure 7) This is a system critical situation and requires that the CHP unit is stopped immediately and maintenance requested. The control system may therefore determine the critical point X based on current heat exchanger efficiency and return temperature in combination with the requirements of the engine.

Figure 8 shows that by recording data points A, B, C during operation of the heat exchanger over times tA, tB and tC the degradation can be recorded and extrapolated so that maintenance can be scheduled before the unit has to be stopped.

Any given installation will have different requirements. For example some installations may have a $T_{retur}$ which never exceeds 60°C whilst other installation will have a maximum return temperature of 40°C. For the installation where return temperature is 60°C the heat exchanger needs higher heat transfer capacity than in an installation where return temperature never exceeds 40°C. In the latter of these two cases the heat exchange will require maintenance after the system with a lower return temperature even when heat exchanger degradation is the same in both systems. Figure 8 shows at point X2 how increasing the return water temperature (shown as line $T_{retur}$ Ambient) reduces the time the heat exchanger can operate for before the $T_{retur}$ ambient and the $T_{lk}$ intersect. Increases in ambient temperatures, for example in the Summer, could cause this increase in $T_{retur}$ and the consequent reduction in time before the heat exchanger requires maintenance. Using state constants and system constants in combination, the present invention provides means to calculate if the efficiency of the heat exchanger is sufficient to meet the current demands of the unit or it needs to be scheduled for maintenance or parts replaced.

In other circumstances it may not be necessary to shut down the unit entirely but instead a control command may be issued to control the power output of the power unit or engine. This can then delay the need for a service or maintenance call as the unit may be able to operate at a reduce level for a period until a time when a service can be scheduled.

As stated above, other components in the unit can also be monitored. For example recording power-loop-flow $\dot{m}_m$ and T-loop-flow m, over time can indicate problems with pipe-work around the system caused by lime-scale or faulty circulation pumps. Recorded data can be compared with known data for the particular pumps installed in a CHP unit. If the flow falls below a defined level it will require a service call. Alternatively, if a flow drops dramatically it will require a stop command to the CHP unit until the component can be replaced.

The central control centre for CHP units according to the present invention can be used to collect and monitor operational data from a number of CHP units and installations. The central control centre monitors each CHP unit and predicts when services or maintenance will be required. These can then be scheduled around maintenance for other CHP units within the same area. The central control centre can also prioritise cases, for example where a CHP unit has failed due to over-heating at a hospital installation. In this circumstance maintenance on other units can be delayed whilst urgent maintenance is carried out on the failed unit.

The information can be relayed in real time but is preferably relayed overnight having been collected by the local control unit for each CHP unit. Each CHP unit is also able to receive control signals from the central control centre. For example the control centre may be provided with an indication of the engine load and may control the engine so as to ensure that the maximum permitted operating temperatures of the engine are not reached.

**Claims**

1. A heat transfer system having a heat source (7); a heat load (8); a heat exchanger for transferring heat from said heat source to said heat load, the heat exchanger comprising:

   a hot side (1) having an input (2) and an output (3) and a cold side (4) having an input (5) and an output (6);
   temperature sensors placed to measure the temperatures of inputs (2, 5) and outputs (3, 6) of the heat exchanger; and
   a means for monitoring the thermal efficiency of the heat exchanger that is arranged to calculate the thermal efficiency based on the measured temperatures;
   **characterized in that** a change in thermal efficiency of the heat exchanger is determined by measuring the thermal efficiency at a first time and a second time;
   **in that** the heat transfer system is arranged to predict when the heat exchanger will reach a pre-determined thermal efficiency using the measured thermal efficiency values; and
   **in that** the pre-determined thermal efficiency is determined based on the current heat exchanger thermal efficiency and the temperature in a return to the heat exchanger.

2. A heat transfer system as claimed in claim 1, wherein the system is arranged to use the prediction of when the heat exchanger will reach a pre-determined thermal efficiency to schedule maintenance of the heat transfer system.

3. A heat transfer system as claimed in claim 1 or 2, wherein one or more of the temperature sensors is an externally mounted thermometer which returns a signal indicating the temperature of the input and/or output(s) of the heat exchanger.

4. A heat transfer system as claimed in claim 1 or 2, wherein one or more of the temperature sensors are thermometers mounted within pipe-work of the heat exchanger, directly in the flow of fluid therein.

5. A heat transfer system as claimed in claim 4, wherein a processor is arranged to determine, using real time and/or historic data about the system, if the thermal efficiency of the system is degrading and/or if the system requires maintenance.

6. A heat transfer system as claimed in any preceding claim, wherein the heat transfer system is configured for use as part of a combined heat and power system, and the pre-determined thermal efficiency is the efficiency at which the heat exchanger is unable to keep an engine of the combined heat and power system below its maximum operating temperature.

7. A heat transfer system as claimed in any preceding claim, wherein the heat exchanger has a primary and a secondary circuit arranged to communicate heat between said heat source and said heat load and a feedback conduit fluidly connecting the output of the secondary circuit to the input of the secondary circuit so as to allow secondary circuit output fluid to return to the input of the secondary circuit.

8. A method of operating a heat transfer system having a heat source (7); a heat load (8); a heat exchanger for transferring heat from said heat source to said heat load, the heat exchanger comprising a hot side (1) having an input (2) and an output (3) and a cold side (4) having an input (5) and an output (6); and temperature sensors placed to measure the temperatures of inputs (2, 5) and outputs (3, 6) of the heat exchanger; the method comprising:

determining a change in thermal efficiency of the heat exchanger by measuring the thermal efficiency at a first time and a second time, wherein the thermal efficiency is calculated based on the measured temperatures; and using the change in thermal efficiency to predict when the heat exchanger will reach a pre-determined thermal efficiency, wherein the predetermined thermal efficiency is determined based on the current heat exchanger thermal efficiency and the temperature in the return to the heat exchanger.

9. A method as claimed in claim 8, wherein the prediction of when the heat exchanger will reach a predetermined thermal efficiency is used to schedule maintenance of the heat transfer system.

10. A method as claimed in claim 9, comprising using the algorithm to determine, using real time and/or historic data about the system, if the thermal efficiency of the system is degrading and/or if the system requires maintenance.

11. A method as claimed in any of claims 8 to 10, wherein the heat transfer system is configured for use as part of a combined heat and power system, and the predetermined thermal efficiency is determined as the efficiency at which the heat exchanger is unable to keep an engine of the combined heat and power system below its maximum operating temperature.

**Patentansprüche**

1. Wärmeübertragungssystem mit einer Wärmequelle (7); einem Wärmeverbraucher (8); einem Wärmetauscher zum Übertragen von Wärme von der Wärmequelle zu dem Wärmeverbraucher, welcher Wärmetauscher aufweist:

Eine warme Seite (1) mit einem Eingang (2) und einem Ausgang (3) und eine kalte Seite (4) mit einem Eingang (5) und einem Ausgang (6); Temperatursensoren, die platziert sind, um die Temperaturen der Eingänge (2, 5) und Ausgänge (3, 6) des Wärmetauschers zu messen; und ein Mittel zum Überwachen des Wärmewirkungsgrads des Wärmetauschers, das dazu ausgelegt ist, den Wärmewirkungsgrad auf Grundlage der gemessenen Temperaturen zu berechnen;

**dadurch gekennzeichnet,**
**dass** eine Veränderung des Wärmewirkungsgrads des Wärmetauschers bestimmt wird, indem der Wärmewirkungsgrad zu einer ersten Zeit und einer zweiten Zeit gemessen wird; **dass** das Wärmeübertragungssystem ausgelegt ist, um es unter Verwendung der gemessenen Wärmewirkungsgradwerte vorherzusagen, wann der Wärmetauscher einen vorbestimmten Wärmewirkungsgrad erreichen wird; und **dass** der vorbestimmten Wärmewirkungsgrad auf Grundlage des momentanen Wärmewirkungsgrads des Wärmetauschers und der Temperatur in einer Rückführung zu dem Wärmetauscher bestimmt wird.

2. Wärmeübertragungssystem nach Anspruch 1, wobei das System ausgelegt ist, um die Vorhersage, wann der Wärmetauscher einen vorbestimmten Wärmewirkungsgrad erreichen wird, zu verwenden, um Wartungen des Wärmeübertragungssystems anzuberaumen.

3. Wärmeübertragungssystem nach Anspruch 1 oder 2, wobei einer oder mehrere der Temperatursensoren ein extern angebrachtes Thermometer ist, ein Signal zurückgibt, welches die Temperatur des Eingangs und/oder Ausgangs/der Ausgänge des Wärmetauschers angibt.

4. Wärmeübertragungssystem nach Anspruch 1 oder 2, wobei einer oder mehrere der Temperatursensoren Thermometer sind, die innerhalb des Rohrwerks des Wärmetauschers, direkt in der Fluidströmung darin, angebracht sind.

5. Wärmeübertragungssystem nach Anspruch 4, wobei ein Prozessor ausgelegt ist, um unter Verwendung von Echtzeit- und/oder historischen Daten über das System zu bestimmen, ob der Wärmewirkungsgrad des Systems abnimmt und/oder ob das System der Wartung bedarf.

6. Wärmeübertragungssystem nach einem der voranstehenden Ansprüche, wobei das Wärmeübertragungssystem für die Verwendung als Teil eines kombinierten Wärme- und Leistungssystems eingerichtet ist und der vorbestimmte Wärmewirkungsgrad der Wirkungsgrad ist, bei welchem der Wärmetauscher nicht in der Lage ist, eine Maschine des kombinierten Wärme- und Leistungssystems unterhalb ihrer maximalen Betriebstemperatur zu halten.

7. Wärmeübertragungssystem nach einem der voranstehenden Ansprüche, wobei der Wärmetauscher einen primären und einen sekundären Kreis, die dazu ausgelegt sind, Wärme zwischen der Wärmequelle und dem Wärmeverbraucher zu übertragen, und eine Rückkopplungsleitung, die den Ausgang des sekundären Kreises mit dem Eingang des sekundären Kreises fluidtechnisch verbindet, um zuzulassen, dass das Ausgangsfluid des sekundären Kreises zu dem Eingang des sekundären Kreises zurückkehrt, besitzt.

8.  Verfahren zum Betreiben eines Wärmeübertragungssystems mit einer Wärmequelle (7); einem Wärmeverbraucher (8); einem Wärmetauscher zum Übertragen von Wärme von der Wärmequelle zu dem Wärmeverbraucher, welcher Wärmetauscher eine warme Seite (1) mit einem Eingang (2) und einem Ausgang (3) und eine kalte Seite (4) mit einem Eingang (5) und einem Ausgang (6); und Temperatursensoren, die platziert sind, um die Temperaturen der Eingänge (2, 5) und Ausgänge (3, 6) des Wärmetauschers zu messen, aufweist; welches Verfahren aufweist:

    Bestimmen einer Veränderung des Wärmewirkungsgrads des Wärmetauschers, indem der Wärmewirkungsgrad zu einer ersten Zeit und einer zweiten Zeit gemessen wird, wobei der Wärmewirkungsgrad auf Grundlage der gemessenen Temperaturen berechnet wird; und
    Verwenden der Veränderung des Wärmewirkungsgrads um vorherzusagen, wann der Wärmetauscher einen vorbestimmten Wärmewirkungsgrad erreichen wird, wobei der vorbestimmte Wärmewirkungsgrad auf Grundlage des momentanen Wärmewirkungsgrads des Wärmetauschers und der Temperatur in der Rückführung zu dem Wärmetauscher bestimmt wird.

9.  Verfahren nach Anspruch 8, wobei die Vorhersage, wann der Wärmetauscher einen vorbestimmten Wärmewirkungsgrad erreichen wird, verwendet wird, um Wartungen des Wärmeübertragungssystems anzuberaumen.

10. Verfahren nach Anspruch 9, aufweisend Verwenden des Algorithmus um unter Verwendung von Echtzeit- und/oder historischen Daten über das System zu bestimmen, ob der Wärmewirkungsgrad des Systems abnimmt und/oder ob das System der Wartung bedarf.

11. Verfahren nach einem der Ansprüche 8 bis 10, wobei das Wärmeübertragungssystem für die Verwendung als Teil eines kombinierten Wärme- und Leistungssystems eingerichtet ist und der vorbestimmte Wärmewirkungsgrad als der Wirkungsgrad bestimmt wird, bei welchem der Wärmetauscher nicht in der Lage ist, eine Maschine des kombinierten Wärme- und Leistungssystems unterhalb ihrer maximalen Betriebstemperatur zu halten.

## Revendications

1.  Système de transfert de chaleur ayant une source de chaleur (7) ; une charge thermique (8) ; un échangeur de chaleur pour transférer la chaleur provenant de ladite source de chaleur à ladite charge thermique, l'échangeur de chaleur comprenant :

    un côté chaud (1) ayant une entrée (2) et une sortie (3) et un côté froid (4) ayant une entrée (5) et une sortie (6) ;
    des capteurs de température placés pour mesurer les températures des entrées (2, 5) et des sorties (3, 6) de l'échangeur de chaleur ; et
    un moyen pour contrôler le rendement thermique de l'échangeur de chaleur qui est agencé pour calculer le rendement thermique sur la base des températures mesurées ;
    **caractérisé en ce qu'**un changement du rendement thermique de l'échangeur de chaleur est déterminé en mesurant le rendement thermique une première fois et une seconde fois ;
    **en ce que** le système de transfert de chaleur est agencé pour prévoir quand l'échangeur de chaleur atteindra un rendement thermique prédéterminé en utilisant les valeurs de rendement thermique mesurées ; et
    **en ce que** le rendement thermique prédéterminé est déterminé sur la base du rendement thermique courant de l'échangeur de chaleur et sur la température dans un retour à l'échangeur de chaleur.

2.  Système de transfert de chaleur selon la revendication 1, dans lequel le système est agencé pour utiliser la prédiction du moment où l'échangeur de chaleur atteindra un rendement thermique prédéterminé pour planifier la maintenance du système de transfert de chaleur.

3.  Système de transfert de chaleur selon la revendication 1 ou 2, dans lequel un ou plusieurs des capteurs de température est un thermomètre monté extérieurement qui renvoie un signal indiquant la température de l'entrée et/ou de la/des sortie(s) de l'échangeur de chaleur.

4.  Système de transfert de chaleur selon la revendication 1 ou 2, dans lequel un ou plusieurs des capteurs de température sont des thermomètres montés à l'intérieur de la tuyauterie de l'échangeur de chaleur, directement dans le flux de fluide en son sein.

5.  Système de transfert de chaleur selon la revendication 4, dans lequel un processeur est agencé pour déterminer, en utilisant des données en temps réel et/ou historiques concernant le système, si le rendement thermique du système se dégrade et/ou si le système exige une maintenance.

6. Système de transfert de chaleur selon l'une quelconque des revendications précédentes, dans lequel le système de transfert de chaleur est configuré pour une utilisation en tant que partie d'un système combiné de chaleur et de puissance, et le rendement thermique prédéterminé est le rendement auquel l'échangeur de chaleur est incapable de conserver un moteur du système combiné de chaleur et de puissance au-dessous de sa température de fonctionnement maximale.

7. Système de transfert de chaleur selon l'une quelconque des revendications précédentes, dans lequel l'échangeur de chaleur a un circuit primaire et un circuit secondaire agencés pour communiquer la chaleur entre ladite source de chaleur et ladite charge thermique et un conduit de retour reliant fluidiquement la sortie du circuit secondaire à l'entrée du circuit secondaire afin de permettre au fluide de sortie de circuit secondaire de retourner à l'entrée du circuit secondaire.

8. Procédé de fonctionnement d'un système de transfert de chaleur ayant une source de chaleur (7) ; une charge thermique (8) ; un échangeur de chaleur pour transférer la chaleur de ladite source de chaleur à ladite charge thermique, l'échangeur de chaleur comprenant un côté chaud (1) ayant une entrée (2) et une sortie (3) et un côté froid (4) ayant une entrée (5) et une sortie (6) ; et des capteurs de température placés pour mesurer les températures des entrées (2, 5) et des sorties (3, 6) de l'échangeur de chaleur ; le procédé comprenant :

la détermination d'un changement de rendement thermique de l'échangeur de chaleur en mesurant le rendement thermique une première fois et une seconde fois, dans lequel le rendement thermique est calculé sur la base des températures mesurées ; et
l'utilisation du changement de rendement thermique pour prévoir quand l'échangeur de chaleur atteindra un rendement thermique prédéterminé, dans lequel le rendement thermique prédéterminé est déterminé sur la base du rendement thermique d'échangeur de chaleur courant et sur la température dans le retour à l'échangeur de chaleur.

9. Procédé selon la revendication 8, dans lequel la prédiction du moment où l'échangeur de chaleur atteindra un rendement thermique prédéterminé est utilisée pour planifier la maintenance du système de transfert de chaleur.

10. Procédé selon la revendication 9, comprenant l'utilisation de l'algorithme pour déterminer, en utilisant des données en temps réel et/ou historiques concernant le système, si le rendement thermique du système se dégrade et/ou si le système exige une maintenance.

11. Procédé selon l'une quelconque des revendications 8 à 10, dans lequel le système de transfert de chaleur est configuré pour une utilisation en tant que partie d'un système combiné de chaleur et de puissance, et le rendement thermique prédéterminé est déterminé comme le rendement auquel l'échangeur de chaleur est incapable de conserver un moteur du système combiné de chaleur et de puissance au-dessous de sa température de fonctionnement maximale.

FIG. 1

FIG. 3

FIG. 2

FIG. 4

FIG. 5

FIG. 6

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5353653 A

- DE 19504325